(19) Europäisches Patentamt
European Patent Office
Office européen des brevets

(11) **EP 1 403 107 B1**

(12) **FASCICULE DE BREVET EUROPEEN**

(45) Date de publication et mention
de la délivrance du brevet:
**26.01.2005   Bulletin 2005/04**

(51) Int Cl.⁷: **B60H 1/32**, B60H 1/00

(21) Numéro de dépôt: **03021442.3**

(22) Date de dépôt: **23.09.2003**

(54) **Installation de climatisation comprenant un dispositif électronique de contrôle**

Klimaanlage mit einer elektronischen Überwachungsvorrichtung

Air conditioner with an electronic control device

(84) Etats contractants désignés:
**AT BE BG CH CY CZ DE DK EE ES FI FR GB GR
HU IE IT LI LU MC NL PT RO SE SI SK TR**

(30) Priorité: **27.09.2002  FR 0211988**

(43) Date de publication de la demande:
**31.03.2004   Bulletin 2004/14**

(73) Titulaire: **VALEO CLIMATISATION
78321 La Verrière (FR)**

(72) Inventeurs:
• **Liu, Jin Ming
  78700 Conflans Saint Honorine (FR)**
• **Ben Yahia, Mohamed
  75005 Paris (FR)**
• **Mace, Emmanuel
  92600 Asnieres Sur Seine (FR)**

(56) Documents cités:
**EP-A- 0 786 632        EP-A- 1 127 721
EP-A- 1 134 516        FR-A- 2 711 731
FR-A- 2 797 036**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne les circuits de climatisation des véhicules à moteur.

Une telle installation est divulguée par exemple par le document FR 2 711 731.

Dans les véhicules à moteur classiques, le compresseur du circuit de climatisation est entraîné par le moteur et consomme donc une partie de la puissance du moteur. Bien que la puissance absorbée par le compresseur, quand il est en marche, ne soit pas importante, elle influe cependant sur le rendement du moteur. En effet, la puissance réellement absorbée par le compresseur diminue le rendement du moteur, augmentant ainsi la consommation de carburant et la pollution générée par les gaz d'échappement du véhicule.

Pour optimiser le rendement du moteur, une solution consiste à estimer la puissance instantanée réellement absorbée par le compresseur. La connaissance de cette information permet, en effet, d'adapter les paramètres d'injection du moteur aux besoins réels. En l'absence de cette information, le calculateur d'injection choisit, par défaut, des paramètres d'injection correspondant à la valeur maximale de la puissance absorbée, valeur qui est rarement atteinte en pratique.

Cet inconvénient peut concerner les compresseurs mécaniques à contrôle interne qui fonctionnent par l'intermédiaire de l'embrayage interposé entre le moteur et le compresseur. En mode régulé, les compresseurs à contrôle interne adaptent leur cylindrée suivant une loi linéaire reliant la valeur de la pression en entrée du compresseur, dite basse pression à la valeur de sortie du compresseur, dite haute pression. Pourtant, il arrive que la puissance réellement absorbée par le compresseur soit inférieure à sa puissance nominale.

De tels compresseurs absorbent une puissance qui dépend des conditions de fonctionnement et qui ne peut donc être réduite, même si on connaît la puissance réellement absorbée par le compresseur. En revanche, il est possible de réguler le fonctionnement de la climatisation en débrayant le compresseur lorsque la puissance n'est pas acceptable.

Cet inconvénient est encore plus gênant pour les compresseurs à contrôle externe, dont l'utilisation se généralise.

En effet, dans les compresseurs mécaniques à contrôle externe, la puissance réellement absorbée par le compresseur est souvent inférieure à sa puissance nominale. Par suite, l'injection du moteur doit compenser l'écart entre la puissance mécanique nominale et la puissance mécanique réellement absorbée, ce qui diminue le rendement du moteur.

Dans des réalisations connues, l'estimation de la puissance instantanée absorbée par le compresseur est obtenue à partir d'une cartographie des états de fonctionnement les plus usités. Cette cartographie comporte des états de référence, chaque état de référence étant associé à une valeur de la puissance absorbée par le compresseur, fournie par des essais préalables. L'estimation de la puissance absorbée par le compresseur est obtenue en comparant l'état de fonctionnement du circuit de climatisation à un état de référence faisant partie de la cartographie. Les méthodes basées sur une telle cartographie requièrent des temps de développement importants et se fondent sur des données empiriques. Elles présentent l'inconvénient de ne pas prendre en compte tous les cas possibles de fonctionnement et par suite de fournir des résultats approximatifs.

Dans d'autres réalisations, la puissance instantanée absorbée par le compresseur est calculée à partir d'une estimation du débit de fluide frigorigène. La demande de brevet français n°01 16568 propose une estimation du débit de fluide frigorigène dans le circuit de climatisation à partir d'une information relative à la vitesse du véhicule et d'une information relative à la tension du groupe moto-ventilateur. Cependant, ces deux informations ne sont pas disponibles sur tous les véhicules.

C'est un but de l'invention de proposer une installation de climatisation permettant la mise en oeuvre d'une équation liant le débit de fluide frigorigène à des paramètres relatifs au fluide frigorigène et disponibles sur tout véhicule pour fournir une estimation du débit de fluide frigorigène, notamment pour calculer la puissance absorbée par le compresseur.

Plus généralement, c'est un but de l'invention de proposer une installation de climatisation permettant la mise en oeuvre d'une telle équation pour fournir une estimation d'une grandeur relative au fluide frigorigène.

L'invention propose à cet effet une installation de climatisation pour véhicule à moteur munie d'un calculateur d'injection et d'un circuit de fluide frigorigène comprenant un compresseur, un organe de refroidissement, un organe de détente et un évaporateur. L'installation comprend également un dispositif électronique de contrôle destiné à interagir avec le circuit de fluide frigorigène et le calculateur d'injection. Avantageusement, l'installation comprend :

- un premier organe de mesure propre à fournir une valeur relative à la pression du fluide en un premier point du circuit de climatisation, dite première pression, ledit premier point étant situé entre la sortie de l'organe de détente et la sortie de l'évaporateur,
- un deuxième organe de mesure propre à fournir une valeur relative à la pression du fluide en un deuxième point du circuit de climatisation, dite deuxième pression, le deuxième point étant situé à l'entrée du compresseur,

tandis que le dispositif électronique de contrôle est apte à mettre en oeuvre la résolution d'une équation liant le débit massique du fluide frigorigène à la différence de pression entre le premier point et le deuxième point pour calculer une estimation d'une grandeur relative au fluide frigorigène.

Selon une première forme de réalisation de l'invention, la grandeur relative au fluide frigorigène est le débit massique de fluide frigorigène tandis que le dispositif électronique de contrôle est apte à résoudre ladite équation à partir de la valeur de la première pression et de la valeur de la deuxième pression.

Selon une deuxième forme de réalisation de l'invention, la grandeur relative au fluide frigorigène est la deuxième pression et le dispositif électronique de contrôle est apte à résoudre ladite équation à partir de la valeur du débit massique du fluide et de la valeur de la première pression.

Selon cette deuxième forme de réalisation de l'invention, l'organe de refroidissement est un condenseur et l'installation comporte des organes de mesures propres à fournir une valeur relative à la température du flux d'air extérieur à l'entrée du condenseur et une valeur relative à la pression du fluide en sortie du compresseur, dite haute pression, tandis que le dispositif électronique de contrôle est apte à utiliser les valeurs fournies par lesdits organes de mesure pour mettre en oeuvre la résolution d'une équation, liant le débit massique du fluide frigorigène à la température du flux d'air extérieur à l'entrée du condenseur et à la haute pression pour calculer une estimation de la valeur instantanée du débit massique du fluide frigorigène.

Selon une troisième forme de réalisation de l'invention, le compresseur est à cylindrée variable et la grandeur relative au fluide frigorigène est la valeur minimale de la pression du fluide correspondant à la cylindrée maximale du compresseur, le dispositif électronique de contrôle étant apte à résoudre ladite équation à partir de la valeur de la première pression et de la valeur de la vitesse de rotation du compresseur.

La valeur de la vitesse de rotation du compresseur peut être fournie au dispositif électronique de contrôle par le calculateur d'injection.

Dans un mode particulier de réalisation, l'installation comporte un compresseur muni d'une vanne de contrôle et le deuxième organe de mesure est un capteur propre à fournir la valeur instantanée de l'intensité de la vanne de contrôle, le dispositif électronique de contrôle étant apte à calculer une estimation initiale de la deuxième pression à partir de la valeur de l'intensité de la vanne de contrôle du compresseur fournie par le deuxième organe de mesure.

Selon ce mode de réalisation, le dispositif électronique de contrôle est apte à comparer l'estimation initiale de la deuxième pression à la valeur minimale de la deuxième pression.

Le dispositif électronique de contrôle est alors apte à réagir au fait que l'estimation initiale de la deuxième pression est inférieure ou égale à la valeur minimale de la deuxième pression en fournissant une estimation finale de la deuxième pression sensiblement égale à la valeur minimale de la deuxième pression.

Le dispositif électronique de contrôle est également apte à réagir au fait que la deuxième pression est supérieure à la valeur minimale de la deuxième pression en fournissant une estimation finale de la deuxième pression sensiblement égale à l'estimation initiale de la deuxième pression.

Dans une autre mode de réalisation, le deuxième organe est un capteur placé au niveau du deuxième point, propre à fournir directement la valeur instantanée de la deuxième pression.

Selon une autre caractéristique de l'invention, le premier organe de mesure est un capteur placé au niveau du premier point, propre à fournir la valeur instantanée de la première pression.

Dans une première variante, le premier organe de mesure peut être une sonde de température, placée dans les ailettes de l'évaporateur, propre à fournir une mesure de la valeur instantanée de la température de l'air dans l'évaporateur.

Dans une deuxième variante, le premier organe de mesure peut être une sonde de température, placée en aval de l'évaporateur, propre à fournir une mesure de la valeur instantanée de la température de l'air entrant dans l'évaporateur.

Dans une troisième variante, le premier organe de mesure peut être une sonde de température propre à fournir la valeur instantanée de la température du fluide, la sonde étant placée au niveau du premier point, au contact de la partie liquide du fluide.

Selon cette troisième variante, le premier point est situé à un endroit du circuit de climatisation où le fluide frigorigène est dans un état diphasique.

En particulier, selon la première variante et la troisième variante, l'organe de détente peut être un détendeur thermostatique tandis que la sonde de température est placée dans la zone d'injection de fluide de l'évaporateur.

Selon ces trois variantes, le dispositif électronique de contrôle est propre à estimer la valeur de la première pression à partir de la valeur fournie par la sonde de température.

En complément, la sonde de température a une constante de temps inférieure ou égale à 5 secondes.

D'autres caractéristiques et avantages de l'invention apparaîtront à l'examen de la description détaillée ci-après, et des dessins annexés sur lesquels:

- la figure 1a représente une vue d'ensemble d'un dispositif de climatisation installé à bord d'un véhicule,

- la figure 1b est un schéma d'un circuit de climatisation pour un fluide frigorigène super-critique,
- la figure 2 est un schéma d'une installation de véhicule automobile à moteur, munie du dispositif de contrôle selon l'invention,
- la figure 3 est un organigramme illustrant les différentes étapes mises en oeuvre par une installation munie d'un compresseur à cylindrée variable, selon l'invention,
- la figure 4 est un diagramme illustrant la courbe de régulation d'un compresseur à contrôle externe, et
- la figure 5 illustre la précision de l'estimation selon l'invention.

L'annexe A comporte les équations mathématiques principales utilisées dans l'installation.

Les dessins contiennent, pour l'essentiel, des éléments de caractère certain. Ils pourront donc non seulement servir à mieux faire comprendre la description, mais aussi contribuer à la définition de l'invention, le cas échéant.

On se réfère tout d'abord à la figure 1a qui représente une vue d'ensemble d'un appareil de climatisation intégré à un véhicule. L'appareil de climatisation comprend un circuit fermé de fluide frigorigène. L'appareil de climatisation comprend également un compresseur 14, un organe de refroidissement 11, un organe de détente 12 et un évaporateur 13, parcourus dans cet ordre par le fluide frigorigène. Le circuit peut également comporter un accumulateur 17 placé entre la sortie de l'évaporateur et l'entrée du compresseur pour éviter les coups de liquide.

L'organe de refroidissement 11 reçoit un flux d'air extérieur 16 pour évacuer la chaleur prélevée dans l'habitacle par l'évaporateur, qui dans certaines conditions de fonctionnement est mis en mouvement par un groupe moto-ventilateur 15.

L'évaporateur 13 reçoit un flux d'air d'un pulseur 20 alimenté par un flux d'air extérieur 18 et produit un flux d'air climatisé 21 qui est envoyé vers l'habitacle du véhicule.

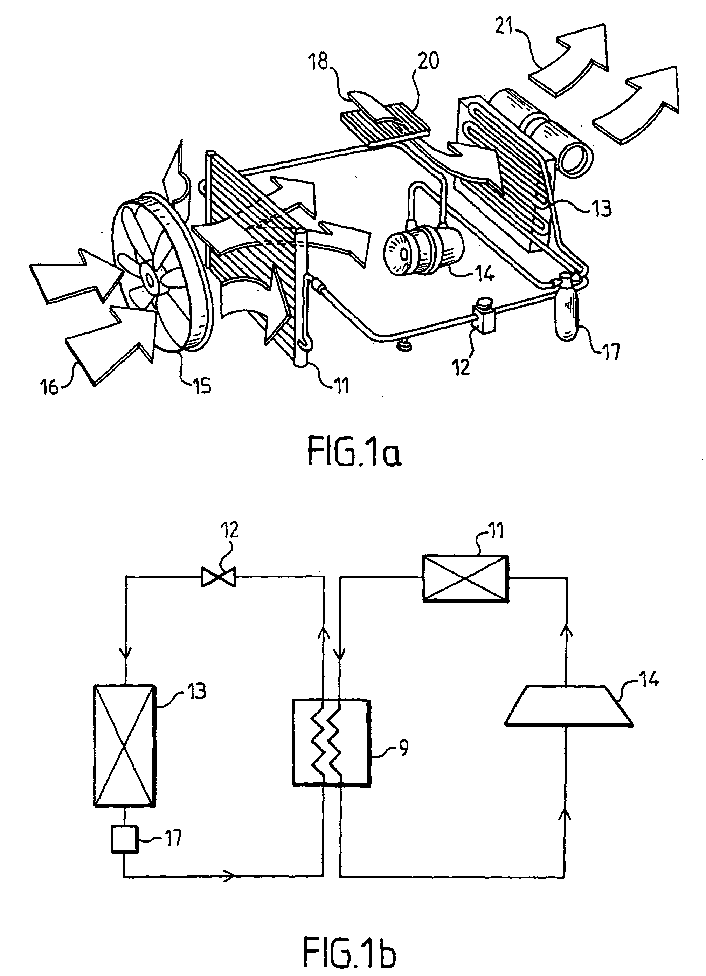

Dans l'exemple de la figure 1a, le circuit de climatisation est parcouru par un fluide frigorigène sous-critique, par exemple le fluide frigorigène R134a. Un tel fluide a une pression critique supérieure à la pression de la source chaude. Dans les circuits de climatisation utilisant de tels fluides, comme celui représenté sur la figure 1, l'organe de refroidissement 11 est un condenseur. L'organe de détente peut être par exemple un orifice calibré ou un détendeur thermostatique.

Toutefois, l'invention n'est pas limitée à des circuits de climatisation fonctionnant avec des fluides frigorigènes sous-critiques et munis d'un organe de refroidissement du type condenseur.

En particulier, le circuit de climatisation peut-être parcouru par un fluide frigorigène supercritique, tel que le fluide frigorigène $CO_2$. Pour les fluides supercritiques, la haute pression à forte température est supérieure à la pression critique du fluide. La figure 1b représente un circuit de climatisation fonctionnant avec le fluide supercritique $CO_2$. Dans un tel circuit, l'organe de refroidissement 11 est un refroidisseur externe ("gas cooler"). L'organe de détente 12 peut être par exemple une vanne électrique ou une vanne mécanique. Le circuit comporte un évaporateur 13, un accumulateur 17 et un compresseur 14 fonctionnant tel que décrit ci-avant. Le circuit comporte en outre un échangeur thermique interne 9.

Dans les circuits de climatisation utilisant un fluide supercritique, le refroidissement du fluide après compression n'entraîne pas de changement de phase. Le fluide ne passe à l'état liquide qu'au cours de la détente. L'échangeur thermique interne 9 permet de refroidir très fortement, voire de liquéfier le fluide sortant du refroidisseur externe 11.

Dans la suite, la description sera faite en référence au circuit de climatisation de la figure 1 fonctionnant avec un fluide sous-critique tel que le R134a, à titre d'exemple non limitatif.

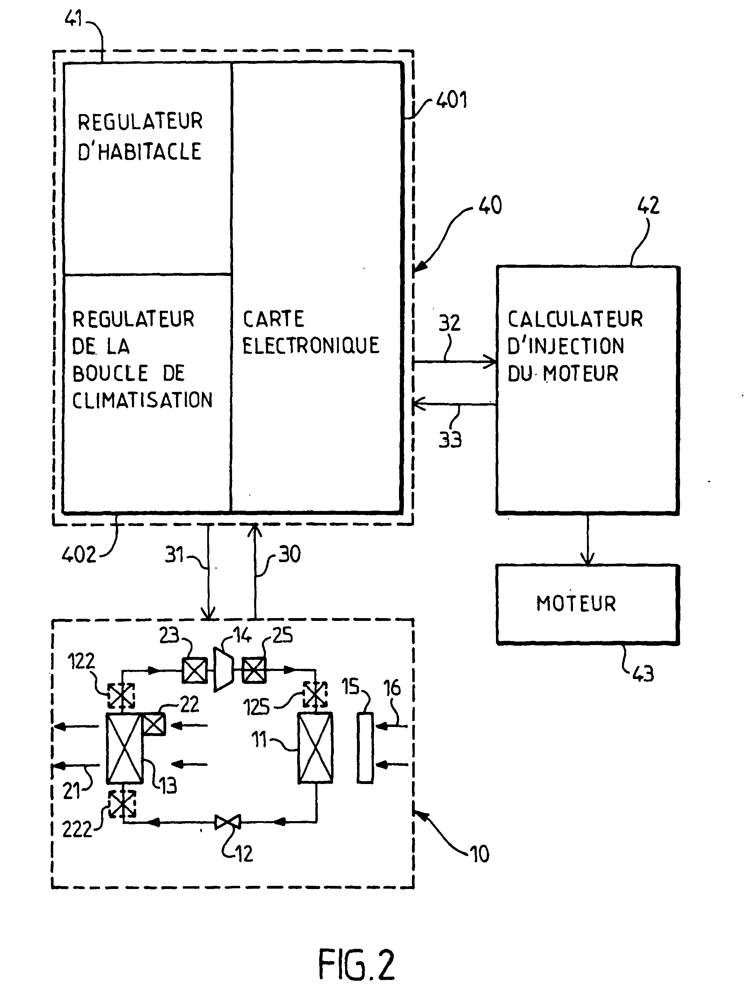

La figure 2 est un schéma représentant l'installation selon l'invention mise en place dans un véhicule automobile. Le véhicule automobile est animé par un moteur 43, commandé par un calculateur d'injection 42. Le calculateur reçoit des informations de divers capteurs qu'il interprète pour ajuster les paramètres.

Le calculateur d'injection 42 est propre à fournir des informations sur les conditions intérieures ou extérieures du véhicule (informations fournies par un capteur solaire, nombre d'occupants, etc.). En particulier, il fournit des informations 33 sur des valeurs instantanées relatives au fonctionnement du véhicule, et notamment sur la vitesse de rotation du compresseur N.

Le véhicule est également équipé de l'appareil de climatisation 10 décrit ci-dessus, représentée schématiquement sur la figure 2. De plus, l'installation est munie d'un calculateur de climatisation 40, comprenant un régulateur d'habitacle 41 et un régulateur de boucle de climatisation 402. Le régulateur d'habitacle 41 est destiné à fixer la consigne de température $T_{ac}$ de l'air extérieur soufflé à l'entrée de l'évaporateur 11.

Le calculateur d'injection du moteur 42 peut agir sur l'appareil de climatisation grâce au régulateur de boucle de climatisation 402 pour commander la mise en marche ou l'arrêt de l'appareil de climatisation selon des conditions liées au fonctionnement du moteur ou des commandes externes. Par exemple, le calculateur d'injection 42 peut interdire la mise en marche de l'appareil de la climatisation lorsque le moteur est fortement sollicité.

La Demanderesse propose d'optimiser le fonctionnement du circuit de climatisation d'une telle installation, en mettant en oeuvre une équation liant le débit de fluide dans le circuit de climatisation à une différence de pression entre deux points situés sur la ligne basse pression. En référence à la figure 2, la ligne basse pression correspond à la partie du circuit de climatisation qui se trouve entre la sortie du détendeur 12 et l'entrée du compresseur 14.

Pour cela, le régulateur de l'habitacle 41, le calculateur d'injection du moteur 42 et l'appareil de climatisation 10 sont reliés à un dispositif électronique de contrôle, par exemple une carte électronique 401 pour un échange d'informations.

La carte électronique 401 est programmée pour résoudre les équations permettant d'estimer la différence de pression sur la ligne basse pression à partir de mesures fournies par l'installation et pour résoudre l'équation qui lie cette différence de pression au débit de fluide frigorigène. En outre, elle peut-être programmée pour mettre en oeuvre la résolution d'une équation liant la puissance absorbée par le compresseur au débit de fluide frigorigène pour fournir une estimation de la puissance absorbée par le compresseur. Elle est agencée pour transmettre les informations qui résultent de ces estimations au calculateur d'injection 42, via la liaison 32.

La carte électronique 401 peut-être considérée comme partie intégrante du calculateur de climatisation 40 du véhicule.

Elle est en liaison avec le régulateur de boucle de climatisation 402 qui a notamment le rôle d'adapter la quantité de chaleur prélevée dans l'habitacle, dite puissance frigorifique, pour atteindre la consigne de température d'air soufflé à la sortie de l'évaporateur ou la consigne de la sonde de l'habitacle.

Selon une caractéristique de l'invention, la carte électronique 401 peut recevoir des informations provenant de capteurs mis en place sur l'appareil de climatisation par la liaison 30. De tels capteurs sont mis en place pour déterminer la valeur instantanée de la pression du fluide frigorigène $P_1$ en un premier point B1 situé entre la sortie de l'organe de détente et la sortie de l'évaporateur, et de la pression du fluide frigorigène $P_2$ en un deuxième point B2 situé à l'entrée du compresseur. La première pression $P_1$ sera désignée ci-après par "pression origine" et la deuxième pression $P_2$ par "pression d'aspiration".

De manière générale, la carte électronique 401 est apte à mettre en oeuvre la relation reliant le débit de fluide frigorigène à la différence de pression entre deux points de la ligne basse pression pour déterminer une grandeur relative au fluide frigorigène.

Dans une première forme de réalisation selon l'invention, cette grandeur relative au fluide frigorigène est le débit de fluide frigorigène. Cette valeur est particulièrement utile pour estimer la puissance consommée par le circuit de climatisation et pour ajuster cette consommation.

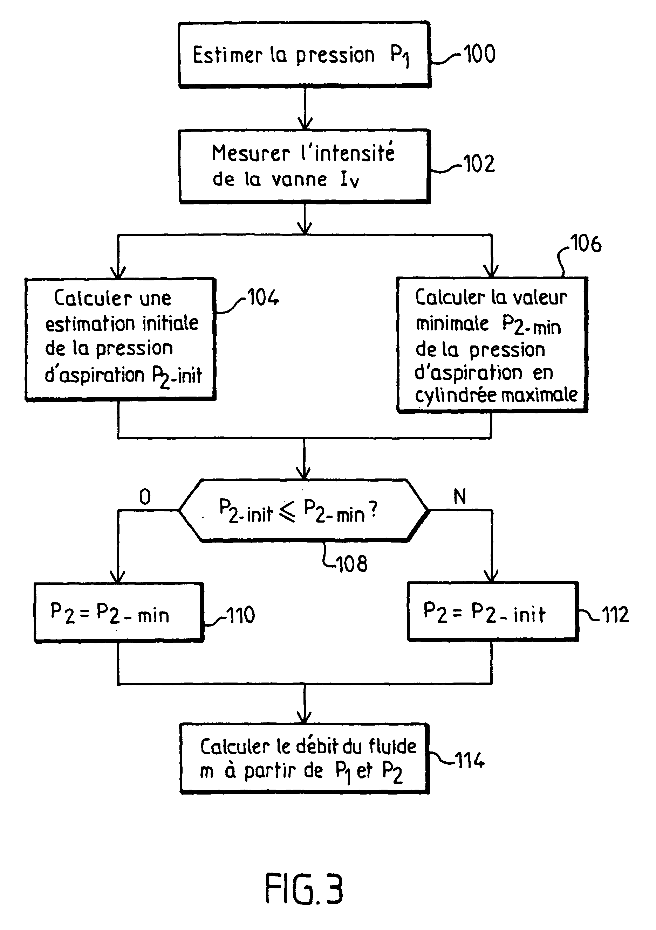

La figure 3 est un organigramme représentant les étapes mises en oeuvre par l'installation pour fournir cette estimation du débit de fluide frigorigène pour un compresseur à cylindrée variable.

A l'étape 100, l'installation fournit à la carte électronique la valeur de la pression origine $P_1$ au point B1.

Selon un aspect de l'invention, le circuit de climatisation comprend un premier organe de mesure propre à fournir une valeur relative à cette pression origine $P_1$.

Le premier organe peut être une sonde de température qui fournit la valeur instantanée de la température $T_{air}$ de l'air dans l'évaporateur. Cette sonde peut-être placée dans les ailettes de l'évaporateur.

En variante, en référence à la figure 2, le premier organe peut être une sonde de température 22 placée en aval de l'évaporateur qui fournit la valeur instantanée de la température $T_{air}$ de l'air à l'entrée de l'évaporateur.

Dans une autre variante, le premier organe est une sonde de température 122 implantée dans le circuit au point B1 propre à fournir la température $T_{FL}$ du fluide frigorigène dans le circuit. Cette sonde 122 est placée au contact de la partie liquide du fluide frigorigène.

Selon cette variante, le point origine B 1 est avantageusement placé dans une zone du circuit où le fluide se trouve dans un état diphasique, ce qui exclut la zone de surchauffe de l'évaporateur. A l'entrée de l'évaporateur, dans la zone d'injection de fluide, la partie du fluide frigorigène sous forme liquide est importante, ce qui rend cette zone favorable à une telle mesure.

Lorsque l'organe de détente est de type détendeur thermostatique, la sonde de température 122 (et donc le point origine B1) est placée dans cette zone d'injection de fluide. En effet, pour les circuits de climatisation utilisant ce type de détendeur, la phase liquide du fluide est rapidement vaporisée dans l'évaporateur. La sonde est donc placée au début du trajet du fluide réfrigérant dans l'évaporateur de manière à se trouver dans la phase la plus liquide possible.

Dans ces variantes de réalisation, la sonde utilisée 122 (respectivement 22) a une faible constante de temps.

La valeur de la température fournie par la sonde 122 (respectivement 22) est transmise à la carte électronique (liaison 30) qui applique la loi de saturation des fluides pour en déduire la valeur de la pression du fluide $P_1$. L'équation de l'annexe A1.1 représente la loi de saturation des fluides reliant la pression $P_1$ à la température $T_{FL}$ fournie par la sonde 22.

L'équation de l'annexe A1.2 représente la loi de saturation des fluides reliant la pression $P_1$ à la température $T_{air}$ fournie par la sonde 22. La carte électronique reçoit en outre la valeur de la température de l'air soufflé en aval de l'évaporateur $T_{ae}$, fournie par le régulateur d'habitacle 41 et la valeur d'efficacité de l'évaporateur $\eta_{ev}$ pour calculer la pression $P_1$. La valeur d'efficacité correspond à un rendement d'échange thermique. Cette valeur s'applique ici uniquement à la zone de l'évaporateur où la sonde est utilisée.

La carte électronique reçoit la valeur mesurée par la sonde 122 (respectivement 22) par la liaison 30 et calcule la valeur de la pression origine $P_1$ conformément à l'équation de l'annexe A1.1 (respectivement A 1.2).

En variante, la pression origine $P_1$ peut-être mesurée directement par un capteur 222 placé au point B1, par exemple à l'entrée de l'évaporateur 13. Cette mesure est transmise à la carte électronique 401, par la liaison 30.

Les étapes suivantes fournissent une estimation de la pression d'aspiration du compresseur $P_2$ au point B2.

Selon une autre caractéristique de l'invention, le circuit de climatisation comprend un deuxième organe de'mesure propre à fournir une valeur relative à la pression d'aspiration $P_2$.

Dans une variante de réalisation, le compresseur du circuit de climatisation est un compresseur à cylindrée variable, muni d'une vanne de contrôle. La pression d'aspiration $P_2$ d'un compresseur à cylindrée variable est liée à la valeur de l'intensité Iv de la vanne de contrôle du compresseur. Ainsi à partir de la valeur de cette intensité, il est possible d'estimer la pression $P_2$ au point B2.

Selon ce mode de réalisation, le deuxième organe de mesure est propre à déterminer la valeur instantanée de l'intensité $I_v$ de la vanne de contrôle du compresseur et à transmettre cette valeur à la carte électronique. La carte électronique 401 estime alors la valeur de la pression d'arrivée $P_2$ à partir de la valeur de l'intensité $I_v$ ainsi obtenue.

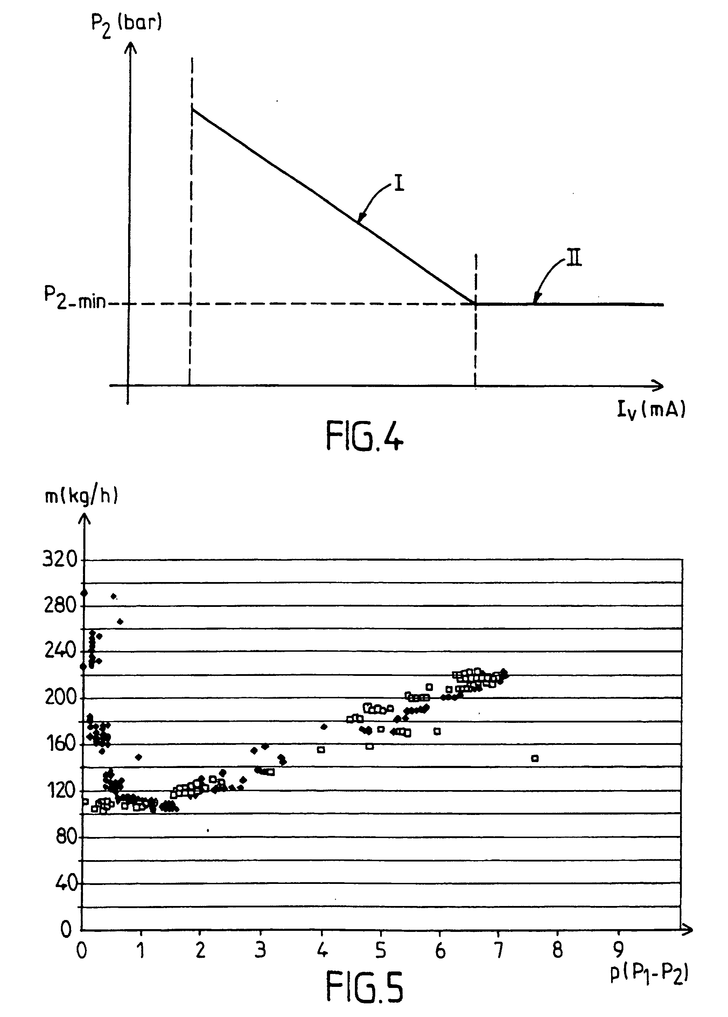

La figure 4 représente un exemple de courbe reliant la pression d'aspiration $P_2$ d'un compresseur à l'intensité $I_v$. Cette courbe a été établie pour un compresseur à contrôle externe. L'équation correspondant à la partie I de la courbe est fournie dans l'annexe A2. Tant que le compresseur n'a pas atteint sa cylindrée maximale, la pression d'aspiration $P_2$ évolue en fonction de Iv (partie I de la courbe). Cependant, lorsque le compresseur atteint sa cylindrée maximale (partie II de la courbe), la pression d'aspiration du compresseur $P_2$ atteint la valeur constante $P_{2\_min}$. L'équation de l'annexe A2 n'est plus valable.

L'estimation de la pression d'aspiration du compresseur $P_2$ à partir de la mesure de l'intensité Iv de la vanne de contrôle peut donc être effectuée en déterminant si le compresseur est en cylindrée maximale, c' est à dire en déterminant si la valeur instantanée de la pression d'aspiration du fluide $P_2$ est inférieure ou égale à $P_{2\_min}$.

Pour cela, la carte électronique effectue une estimation initiale $P_{2\_init}$ de la pression d'aspiration du compresseur à partir de l'intensité $I_v$ de la vanne de contrôle et détermine si le compresseur est en cylindrée maximale. Le cas échéant, la carte électronique 401 ajuste l'estimation initiale de la pression d'aspiration $P_{2\_init}$ du compresseur, ce qui fournit l'estimation finale $P_2$ de cette pression.

L'estimation de la pression d'aspiration $P_2$ est réalisée par les étapes 102,104, 106, 108, 110, et 112, selon ce mode de réalisation.

A l'étape 102, la valeur instantanée de l'intensité $I_v$ de la vanne de contrôle est mesurée par le deuxième organe de mesure. Cet organe de mesure est un capteur pouvant être lié à tout calculateur du véhicule.

A l'étape 104, la carte électronique utilise l'équation liant la pression $P_2$ à l'intensité $I_v$ de la vanne de contrôle, par exemple l'équation de l'annexe A2.1, pour calculer une estimation initiale de la pression d'aspiration $P_{2\_init}$ du compresseur à partir de la valeur mesurée de l'intensité $I_v$.

Avantageusement, la carte électronique utilise l'équation de l'annexe A3 liant le débit de fluide dans le circuit de climatisation à une différence de pression entre les points B1 et B2 pour déterminer si le compresseur est en cylindrée maximale.

Pour cela, à l'étape 106, la carte électronique calcule une estimation de la pression d'aspiration lorsque le compresseur est en cylindrée maximale $P_{2\_min}$ à partir de l'équation de l'annexe A3.

L'équation de l'annexe A3 fournit en effet le débit de fluide frigorigène m en fonction de la pression origine $P_1$ et de la pression d'aspiration $P_2$.

Par ailleurs, le débit de fluide frigorigène m est lié à la cylindrée du compresseur $C_d$, à la haute pression $P_d$, à la pression d'aspiration $P_2$ et à la vitesse de rotation du compresseur N, selon l'équation de l'annexe A5.

L'identification de l'équation de l'annexe A3 à l'équation de l'annexe A5 fournit l'équation de l'annexe A6 qui lie la pression d'aspiration $P_2$ à la haute pression $P_d$, à la pression origine $P_1$, à la vitesse de rotation du compresseur N et à la cylindrée du compresseur $C_y$.

En cylindrée maximale, la valeur de la cylindrée $C_y$ du compresseur est connue. La carte électronique peut donc calculer la pression d'aspiration $P_{2\_min}$ du fluide pour un compresseur en cylindrée maximale selon cette équation. La valeur de la vitesse de rotation N du compresseur est fournie à la carte par le calculateur d'injection 42 via la liaison 33. L'installation peut comporter un capteur de pression 25 ou un capteur de température 125 pour estimer la haute pression $P_d$. En général, de tels capteurs sont présents sur les circuits de climatisation. De plus, la pression origine $P_1$ a été estimée à l'étape 100.

A l'étape 108, la carte électronique compare l'estimation initiale $P_{2\_init}$ de la pression d'aspiration du compresseur $P_2$, obtenue à l'étape 104, à la valeur de la pression d'aspiration du compresseur en cylindrée maximale $P_{2\_min}$, obtenue à l'étape 106 et fournit à l'étape 110 ou 112 une estimation finale de la pression d'aspiration $P_2$ en fonction du résultat de la comparaison.

Plus exactement, en référence à la figure 5, si l'estimation initiale de la pression d'aspiration du compresseur $P_{2\_init}$ est inférieure ou égale à la valeur de la pression d'aspiration du compresseur en cylindrée maximale $P_{2\_min}$, le compresseur est en cylindrée maximale, et par suite, la valeur de la pression d'aspiration $P_2$ correspond à la valeur de la pression d'aspiration du compresseur en cylindrée maximale $P_{2\_min}$.

Dans le cas contraire, la valeur de la pression d'aspiration $P_2$ correspond à l'estimation initiale $P_{2\_init}$ de la pression d'aspiration du compresseur obtenue à l'étape 104.

Dans une variante de réalisation, utilisant un compresseur à cylindrée fixe, la pression d'aspiration $P_2$ est estimée selon l'équation de l'annexe. En effet, la cylindrée $C_y$ d'un compresseur à cylindrée fixe étant connue, la carte électronique peut résoudre l'équation de l'annexe A6 pour fournir la valeur de la pression d'aspiration $P_2$, de la valeur de la vitesse de rotation N du compresseur fournie par le calculateur d'injection 42, et de la valeur de la haute pression $P_d$ fourni par le capteur 25 (respectivement 125).

D'autres variantes de réalisation permettent d'estimer la pression d'aspiration $P_2$, pour tout type de compresseur.

Ainsi, en référence à la figure 2, le deuxième organe de mesure peut être un capteur de pression 23, placé au point B2, propre à fournir une mesure de la valeur instantanée de la pression d'aspiration $P_2$ du compresseur. Cette mesure est transmise à la carte électronique 401, par la liaison 30.

A l'étape 114, la carte électronique met en oeuvre l'équation de l'annexe A3 et utilise les valeurs estimées de la pression origine $P_1$ et de la pression d'aspiration $P_2$ pour calculer une grandeur relative au fluide frigorigène.

Dans la première forme de réalisation, selon l'invention, la carte électronique 401 résout l'équation de l'annexe A3 pour calculer une estimation du débit de fluide frigorigène m dans le circuit de climatisation. La perte de charge $(P_1-P_2)$ est calculée à partir des valeurs des pressions $P_1$ et $P_2$ estimées au cours des étapes précédentes. S est une constante relative au circuit de climatisation. Le coefficient $\rho$ correspond à la densité de charge du fluide utilisé, par exemple celle du fluide R134a. Le coefficient K est obtenu en fonction du choix de calcul de la densité de charge $\rho$.

Cette densité de charge $\rho$ peut être calculée à partir de la pression origine $P_1$, selon l'équation de l'annexe A4.1, ou à partir de la pression d'aspiration $P_2$, selon l'équation de l'annexe A4.2, ou encore à partir d'une moyenne de ces deux pressions. L'annexe A4.3 contient un exemple d'équation fournissant la densité de charge p pour le fluide frigorigène sous-critique R 134a. Toutefois, comme indiqué précédemment, l'invention n'est pas limitée a un circuit de climatisation fonctionnant avec un fluide frigorigène sous-critique. Ainsi, l'annexe A4.4 est un exemple d'équation fournissant la densité de charge p pour le fluide frigorigène super-critique $CO_2$ (R744).

L'estimation du débit de fluide frigorigène m est particulièrement utile dans les circuits de climatisation. Il permet notamment de calculer une estimation de la puissance absorbée par le compresseur $P_a$.

La puissance absorbée par le compresseur $P_a$ peut être en effet estimée à partir du débit massique de fluide frigorigène m obtenu selon la première forme de réalisation, par exemple selon l'équation fournie par l'annexe A7. La carte électronique 401 résout cette équation à partir de la valeur du débit de fluide frigorigène m estimé selon l'invention, de la valeur de la vitesse de rotation du compresseur N fournie par le calculateur d'injection 42, de la valeur de la pression d'aspiration $P_2$ estimée précédemment et de la valeur de la haute pression $P_d$ fournie par le capteur 25 (respectivement 125). Les constantes C et D sont liées à des paramètres de fonctionnement du circuit de climatisation et donc fixées en tant que paramètres de calcul.

Le calculateur adresse alors au module d'injection du moteur la valeur estimée de la puissance mécanique absorbée par le compresseur $P_a$ et adapte la puissance nominale absorbée par le compresseur, si celle-ci dépasse une valeur maximale définie par le calculateur à partir de cette valeur estimée. Par suite la consommation de carburant est réduite et les augmentations excessives de la puissance absorbée par le compresseur sont mieux contrôlées.

La figure 4 illustre la précision de l'estimation du débit de fluide frigorigène m selon cette forme de réalisation pour le fluide frigorigène sous-critique R134a. La figure est un diagramme représentant la valeur du débit de fluide frigorigène m (en ordonnées) en fonction de la valeur de la différence de $[\rho*(P_1 - P_2)]$ (en abscisses).

Les essais ont été réalisés pour le fluide frigorigène R134a, avec $\rho=2,4326*P_2+0,2203$ et $\eta_{ev} = 0,9$, pour les conditions suivantes:

- température extérieure de 25°C, humidité relative de 40%, vitesse du pulseur de 83 g/s, vitesse de rotation N=2000tr/min;
- température extérieure de 45°C, humidité relative de 40%, vitesse du pulseur de 111 à 138 g/s, vitesse de rotation N=2000tr/min.

Le point origine B1 est situé à la sortie de l'évaporateur. Les points de forme carrée sont obtenus pour une pression d'aspiration $P_2$ mesurée et une pression origine $P_1$ estimée à partir de la sonde de mesure de température d'air. Les points en forme de losange sont obtenus pour une pression $P_1$ et une pression $P_2$ mesurées.

Selon une deuxième forme de réalisation selon l'invention, l'installation selon l'invention est utilisée pour obtenir une estimation de la pression d'aspiration $P_2$ du fluide frigorigène.

Dans cette deuxième forme de réalisation, la carte électronique 401 met en oeuvre la résolution de l'équation de l'annexe A3 pour calculer une estimation de la pression d'aspiration $P_2$ du fluide frigorigène, lorsque le véhicule est déjà muni d'un dispositif connu d'estimation du débit de fluide frigorigène. Un exemple d'un tel dispositif est décrit dans la demande de brevet français n°01 16568. Dans ce dispositif, l'organe de refroidissement est un condenseur, ce qui permet l'utilisation d'un fluide frigorigène sous-critique, tel que le fluide frigorigène R134. Ce dispositif comprend des organes de mesures permettant d'établir des valeurs relatives à la température du flux d'air extérieur à l'entrée du condenseur $T_{aek}$ et à la pression $P_d$ du fluide frigorigène en sortie du compresseur. La carte électronique met alors en oeuvre l'équation de l'annexe A1 pour calculer une estimation du débit de fluide frigorigène m dans le circuit de climatisation à partir des valeurs de la température du flux d'air extérieur soufflé à l'entrée du condenseur $T_{ack}$, et de la pression du fluide frigorigène en sortie du compresseur $P_d$.

La résolution de l'équation de l'annexe A3 pour calculer une estimation de la pression d'aspiration $P_2$ du fluide frigorigène, nécessite en outre une estimation de la pression origine $P_1$ et de la densité de charge du fluide p. La valeur de la pression origine $P_1$ est fournie par l'étape 100. La densité de charge du fluide $\rho$ peut être estimée à-partir de $P_1$ selon l'annexe A4.1.

D'autres dispositifs d'estimation du fluide frigorigène, fonctionnant pour tout type de fluide frigorigène et pour tout type d'organe de refroidissement, peuvent être utilisés. Par exemple, le dispositif du brevet JP 2001-73941 peut fonctionner avec un circuit de climatisation dans lequel l'organe de refroidissement est un refroidisseur externe ("gas cooler") et le fluide frigorigène est le fluide supercritique $CO_2$ (R744).

Cette estimation $P_2$ peut être utilisée pour calculer la puissance consommée par le compresseur et également assurer son bon fonctionnement. Elle peut également être utilisée pour contrôler ou valider une valeur de la pression d'aspiration obtenue par d'autres moyens, comme celle obtenue par exemple en utilisant l'intensité du courant de la vanne du compresseur selon les étapes 102 et 104.

Selon une troisième forme de réalisation selon l'invention, la carte électronique 401 résout l'équation de l'annexe A3 pour détecter la cylindrée maximale d'un compresseur à cylindrée variable. La première forme de réalisation de l'invention utilise cette détection de la cylindrée maximale, mais la détection de la cylindrée du compresseur peut-être utilisée dans d'autres applications. Par exemple, dans le cadre d'une régulation /d'un contrôle de la boucle froide, on utilise cette détection pour arrêter la commande du compresseur et ainsi optimiser la régulation de température d'air soufflé. Cette forme de réalisation a été décrite en référence aux étapes 102, 104, 106, 108, 110 et 112 de la figure 3.

La présente invention vise également le code logiciel qu'elle fait intervenir, tout particulièrement lorsqu'il est mis à disposition sur tout support lisible sur un ordinateur. L'expression "support lisible par ordinateur" couvre un support de stockage, par exemple magnétique ou optique, aussi bien qu'un moyen de transmission, tel qu'un signal numérique ou analogique.

Annexe A

A1. Estimation de la pression origine

A1.1- Sonde de température de fluide réfrigérant

$$P_1 = Psat[T_{FL}]$$

A1.2- Sonde de température d'air

$$P_1 = Psat[ (T_{air}-(1-\eta_{ev})* T_{ae}/\eta_{ev}]$$

A2. Estimation de la pression d'aspiration d'un compresseur à contrôle externe pour $P_2 > P_2$ max:

$$P_2 = a.k.\ Iv^2 + b.Iv + c$$

A3. Equation liant le débit de fluide frigorigène m à la perte de charge sur la ligne basse pression $\Delta P$

$$m = racine\ [(2.\ \rho.\ S^2.\Delta P)/ K]$$

$$\Delta P = P_1 - P_2$$

A4. Estimation de la densité de fluide $\rho$ (en kg/m$^3$)

A4.1- Estimation de la densité de fluide $\rho$ à partir de $P_1$

$$\rho(P_1) = k1 \cdot P_1 + k2,$$

avec k1 et k2 constantes

A4.2- Estimation de la densité de fluide $\rho$ à partir de $P_2$

$$\rho(P_2) = k1' \cdot P_{su} + k2',$$

avec k1' et k2' constantes

A4.3- Exemple d'estimation de la densité de fluide $\rho$ à partir de P1 pour le fluide sous-critique R134a

$$\rho(P_1) = 2,4326 \cdot P_1 + 0,2203$$

A4.4- Exemple d'estimation de la densité de fluide $\rho$ à partir de P1 pour le fluide supercritique CO2

$$\rho(P_1) = 3,6814 \cdot P_1 - 30,6$$

A5. Estimation de débit de fluide frigorigène pour un compresseur à contrôle externe

$$m = N \cdot Cy \cdot \rho(P_2) \cdot [k3(N) \cdot (P_d/P_2) + k4(N)]$$

A6. Estimation de la pression arrivée $P_2$ en fonction de la cylindrée Cy du compresseur à contrôle externe

$$f_4(N,C_y) \cdot P_2{}^4 + f_3(P_d,P_1,C_y) \cdot P_2{}^3 + f_2(P_d,P_1,N,C_y) \cdot P_2{}^2 + f_1(Pd) \cdot P_2 + f_0(P_d) = 0$$

A7. Estimation de la puissance absorbée par le compresseur $P_a$

$$P_a = C \cdot m \cdot (Pr^{(k-1)/k} - 1) + D \cdot N \text{ avec } Pr = P_d/P_2$$

**Revendications**

1. Installation de climatisation pour véhicule à moteur munie d'un calculateur d'injection (42) et d'un circuit de fluide frigorigène comprenant un compresseur (14), un organe de refroidissement (11), un organe de détente (12) et un évaporateur (13), ainsi qu'un dispositif électronique de contrôle (401) destiné à interagir avec le circuit de fluide frigorigène (10) et le calculateur d'injection (42),
**caractérisée en ce qu'**elle comprend :

   - un premier organe de mesure propre à fournir une valeur relative à la pression du fluide en un premier point du circuit de climatisation ($B_1$), dite première pression ($P_1$), ledit premier point étant situé entre la sortie de l'organe de détente et la sortie de l'évaporateur,
   - un deuxième organe de mesure propre à fournir une valeur relative à la pression du fluide en un deuxième point du circuit de climatisation ($B_2$), dite deuxième pression ($P_2$), ledit deuxième point étant situé à l'entrée du compresseur,

et **en ce que** le dispositif électronique de contrôle (401) est apte à mettre en oeuvre la résolution d'une équation liant le débit massique du fluide frigorigène (m) à la différence de pression entre le premier point et le deuxième point ($P_1$-$P_2$) pour calculer une estimation d'une grandeur relative au fluide frigorigène.

2. Installation de climatisation selon la revendication 1, **caractérisée en ce que** la grandeur relative au fluide frigorigène est le débit massique de fluide frigorigène (m) et **en ce que** le dispositif électronique de contrôle (401) est apte à résoudre ladite équation à partir de la valeur de la première pression ($P_1$) et de la valeur de la deuxième pression ($P_2$).

3. Installation de climatisation selon la revendication 1, **caractérisée en ce que** la grandeur relative au fluide frigorigène est la deuxième pression ($P_2$) et **en ce que** le dispositif électronique de contrôle est apte à résoudre ladite équation à partir de la valeur du débit massique du fluide (m) et de la valeur de la première pression ($P_1$).

4. Installation de climatisation selon la revendication 3, **caractérisée en ce que** l'organe de refroidissement est un condenseur et **en ce qu'**elle comporte des organes de mesures propres à fournir une valeur relative à la température du flux d'air extérieur à l'entrée du condenseur ($T_{aek}$) et une valeur relative à la pression du fluide en sortie du compresseur, dite haute pression ($P_d$), le dispositif électronique de contrôle (401) étant apte à utiliser les valeurs fournies par lesdits organes de mesure pour mettre en oeuvre la résolution d'une équation, liant le débit massique du fluide frigorigène (m) à la température du flux d'air extérieur à l'entrée du condenseur ($T_{aek}$) et à la haute pression ($P_d$), pour calculer une estimation de la valeur instantanée du débit massique du fluide frigorigène (m).

5. Installation de climatisation selon la revendication 1, **caractérisée en ce que** le compresseur est à cylindrée variable et **en ce que** la grandeur relative au fluide frigorigène est la valeur minimale de la pression du fluide ($P_{2\_min}$) correspondant à la cylindrée maximale du compresseur, le dispositif électronique de contrôle étant apte à résoudre ladite équation à partir de la valeur de la première pression ($P_1$) et de la valeur de la vitesse de rotation du compresseur (N).

6. Installation de climatisation selon la revendication 3, **caractérisée en ce que** la valeur de la vitesse de rotation du compresseur (N) est fournie au dispositif électronique de contrôle par le calculateur d'injection.

7. Installation selon l'une des revendications précédentes, **caractérisée en ce que** le compresseur est muni d'une vanne de contrôle et **en ce que** le deuxième organe de mesure est un capteur, propre à fournir la valeur instantanée de l'intensité de la vanne de contrôle ($I_v$), le dispositif électronique de contrôle (401) étant apte à calculer une estimation initiale de la deuxième pression ($P_{2\_init}$) à partir de la valeur de l'intensité de la vanne de contrôle du compresseur ($I_v$) fournie par le deuxième organe de mesure.

8. Installation de climatisation selon la revendication 7 prise en combinaison avec la revendication 5, **caractérisée en ce que** le dispositif électronique de contrôle (401) est apte à comparer l'estimation initiale de la deuxième pression ($P_{2\_init}$) à la valeur minimale de la deuxième pression ($P_{2-min}$).

9. Installation de climatisation selon la revendication 8, **caractérisée en ce que** le dispositif électronique de contrôle (401) est apte à réagir au fait que l'estimation initiale de la deuxième pression ($P_{2\_init}$) est inférieure ou égale à la valeur minimale de la deuxième pression ($P_{2\_min}$) en fournissant une estimation finale de la deuxième pression ($P_2$) sensiblement égale à la valeur minimale de la deuxième pression ($P_{2-min}$).

10. Installation de climatisation selon la revendication 8, **caractérisée en ce que** le dispositif électronique de contrôle (401) est apte à réagir au fait que la deuxième pression ($P_{2\_init}$) est supérieure à la valeur minimale de la deuxième pression ($P_{2-min}$) en fournissant une estimation fmale de la deuxième pression ($P_2$) sensiblement égale à l'estimation initiale de la deuxième pression ($P_{2\_init}$).

11. Installation de climatisation selon l'une des revendications 1 à 4, **caractérisée en ce que** le deuxième organe est un capteur (23) placé au niveau du deuxième point, propre à fournir la valeur instantanée de la deuxième pression (P2).

12. Installation de climatisation selon l'une des revendications précédentes, **caractérisée en ce que** le premier organe de mesure est un capteur (222) placé au niveau du premier point, propre à fournir directement la valeur instantanée de la première pression (P$_1$).

**13.** Installation de climatisation selon l'une des revendications 1 à 11, **caractérisée en ce que** le premier organe de mesure est une sonde de température (22), placée dans les ailettes de l'évaporateur (13), propre à fournir une mesure de la valeur instantanée de la température de l'air dans l'évaporateur (T$_{air}$).

**14.** Installation de climatisation selon l'une des revendications 1 à 11, **caractérisée en ce que** le premier organe de mesure est une sonde de température (22), placée en aval de l'évaporateur (13), propre à fournir une mesure de la valeur instantanée de la température de l'air entrant dans l'évaporateur (T$_{air}$).

**15.** Installation de climatisation selon l'une des revendications 1 à 11, **caractérisée en ce que** le premier organe de mesure est une sonde de température (122) propre à fournir la valeur instantanée de la température du fluide (T$_{FL}$), la sonde étant placée au niveau du premier point, au contact de la partie liquide du fluide.

**16.** Installation de climatisation selon la revendication 15, **caractérisée en ce que** le premier point (B1) est situé à un endroit du circuit de climatisation où le fluide frigorigène est dans un état diphasique.

**17.** Installation de climatisation selon l'une des revendications 13 et 15, dans laquelle l'organe de détente est un détendeur thermostatique, **caractérisée en ce que** la sonde de température (122) est placée dans la zone d'injection de fluide de l'évaporateur.

**18.** Installation de climatisation selon l'une des revendications 13 à 17, **caractérisée en ce que** le dispositif électronique de contrôle est propre à estimer la valeur de la première pression (P$_1$) à partir de la valeur fournie par la sonde de température (122, 22).

**19.** Installation de climatisation selon l'une des revendications 13 à 18, **caractérisée en ce que** la sonde de température (22, 122) a une constante de temps inférieure ou égale à 5 secondes.


**Patentansprüche**

**1.** Klimatisierungsanlage für Kraftfahrzeuge, die mit einem Einspritzrechner (42) und einem Kältemittelkreis versehen ist, der einen Kompressor (14), ein Kühlglied (11), ein Entspannungsglied (12) und einen Verdampfer (13) enthält, sowie mit einer elektronischen Steuervorrichtung (401), die dazu bestimmt ist, mit dem Kältemittelkreis (10) und dem Einspritzrechner (42) in Wechselwirkung zu treten,
   **dadurch gekennzeichnet, dass** sie enthält:

   - ein erstes Messglied, das an einem ersten Punkt des Klimatisierungskreises (B$_1$) einen auf den Druck des Kältemittels bezogenen Wert, erster Druck (P$_1$) genannt, liefern kann, wobei der genannte erste Punkt zwischen dem Auslass des Entspannungsglieds und dem Auslass des Verdampfers liegt,

   - ein zweites Messglied, das an einem zweiten Punkt des Klimatisierungskreises (B$_2$) einen auf den Druck des Kältemittels bezogenen Wert, zweiter Druck (P$_2$) genannt, liefern kann, wobei der genannte zweite Punkt am Einlass des Kompressors liegt,

   und dass die elektronische Steuervorrichtung (401) die Lösung einer Gleichung umsetzen kann, welche den Massendurchsatz (m) des Kältemittels mit der Druckdifferenz zwischen erstem Punkt und zweitem Punkt (P$_1$-P$_2$) in Beziehung setzt, um einen Schätzwert für eine auf das Kältemittel bezogene Größe zu errechnen.

**2.** Klimatisierungsanlage nach Anspruch 1, **dadurch gekennzeichnet, dass** die auf das Kältemittel bezogene Größe der Massendurchsatz (m) des Kältemittels ist und dass die elektronische Steuervorrichtung (401) die genannte Gleichung aus dem Wert des ersten Drucks (P$_1$) und dem Wert des zweiten Drucks (P$_2$) lösen kann.

**3.** Klimatisierungsanlage nach Anspruch 1, **dadurch gekennzeichnet, dass** die auf das Kältemittel bezogene Größe der zweite Druck (P$_2$) ist und dass die elektronische Steuervorrichtung (401) die genannte Gleichung aus dem Wert des ersten Drucks (P$_1$) und dem Wert des zweiten Drucks (P$_2$) lösen kann

**4.** Klimatisierungsanlage nach Anspruch 3, **dadurch gekennzeichnet, dass** das Kühlglied ein Kondensator ist und dass sie Messglieder enthält, welche einen auf die Temperatur der Außenluftströmung am Einlass des Kondensators ($T_{aek}$) bezogenen Wert und einen auf den Druck des Kältemittels am Auslass des Kompressors bezogenen Wert, Hochdruck ($P_d$) genannt, liefern können, wobei die elektronische Steuervorrichtung (401) die von den genannten Messgliedern gelieferten Werte verwenden kann, um die Lösung einer Gleichung umzusetzen, welche den Massendurchsatz (m) des Kältemittels mit der Temperatur der Außenluftströmung am Einlass des Kondensators ($T_{aek}$) und mit dem Hochdruck ($P_d$) in Beziehung setzt, um einen Schätzwert für den momentanen Wert des Massendurchsatzes (m) des Kältemittels zu errechnen.

5. Klimatisierungsanlage nach Anspruch 1, **dadurch gekennzeichnet, dass** der Kompressor im Fördervolumen verstellbar ist und dass die auf das Kältemittel bezogene Größe der Mindestwert des Kältemitteldrucks ($P_{2\_min}$) ist, der dem maximalen Fördervolumen des Kompressors entspricht, wobei die elektronische Steuervorrichtung die genannte Gleichung aus dem Wert des ersten Drucks ($P_1$) und dem Wert der Drehzahl (N) des Kompressors lösen kann.

6. Klimatisierungsanlage nach Anspruch 3, **dadurch gekennzeichnet, dass** der Wert der Drehzahl (N) des Kompressors über den Einspritzrechner der elektronischen Steuervorrichtung zugeführt wird.

7. Klimatisierungsanlage nach einem der vorangehenden Ansprüche, **dadurch gekennzeichnet, dass** der Kompressor mit einem Steuerventil versehen ist und dass das zweite Messglied ein Sensor ist, der den momentanen Wert der Leistung des Steuerventils ($I_v$) liefern kann, wobei die elektronische Steuervorrichtung (401) einen anfänglichen Schätzwert des zweiten Drucks ($P_{2-init}$) aus dem Wert der Leistung ($I_v$) des Steuerventils des Kompressors errechnen kann, der vom zweiten Messglied geliefert wird.

8. Klimatisierungsanlage nach Anspruch 7 in Kombination mit Anspruch 5, **dadurch gekennzeichnet, dass** die elektronische Steuervorrichtung (401) den anfänglichen Schätzwert des zweiten Drucks ($P_{2-init}$) mit dem Mindestwert des zweiten Drucks ($P_{2\_min}$) vergleichen kann.

9. Klimatisierungsanlage nach Anspruch 8, **dadurch gekennzeichnet, dass** die elektronische Steuervorrichtung (401) darauf reagieren kann, dass der anfängliche Schätzwert des zweiten Drucks ($P_{2\_init}$) kleiner oder gleich dem Mindestwert des zweiten Drucks ($P_{2\_min}$) ist, indem sie einen endgültigen Schätzwert des zweiten Drucks ($P_2$) liefert, der im wesentlichen gleich dem Mindestwert des zweiten Drucks ($P_{2\_min}$) ist.

10. Klimatisierungsanlage nach Anspruch 8, **dadurch gekennzeichnet, dass** die elektronische Steuervorrichtung (401) darauf reagieren kann, dass der zweite Druck ($P_{2\_init}$) größer als der Mindestwert des zweiten Drucks ($P_{2\_min}$) ist, indem sie einen endgültigen Schätzwert des zweiten Drucks ($P_2$) liefert, der im wesentlichen gleich dem anfänglichen Schätzwert des zweiten Drucks ($P_{2\_min}$) ist.

11. Klimatisierungsanlage nach einem der Ansprüche 1 bis 4, **dadurch gekennzeichnet, dass** das zweite Glied ein Sensor (23) ist, der im Bereich des zweiten Punkts angeordnet ist und den momentanen Wert des zweiten Drucks ($P_2$) liefern kann.

12. Klimatisierungsanlage nach einem der vorangehenden Ansprüche, **dadurch gekennzeichnet, dass** das erste Messglied ein Sensor (222) ist, der im Bereich des ersten Punkts angeordnet ist und direkt den momentanen Wert des ersten Drucks ($P_1$) liefern kann.

13. Klimatisierungsanlage nach einem der Ansprüche 1 bis 11, **dadurch gekennzeichnet, dass** das erste Messglied ein Temperaturfühler (22) ist, der in den Rippen des Verdampfers (13) angeordnet ist und eine Messung des momentanen Werts der Temperatur ($T_{air}$) der Luft im Verdampfer liefern kann.

14. Klimatisierungsanlage nach einem der Ansprüche 1 bis 11, **dadurch gekennzeichnet, dass** das erste Messglied ein Temperaturfühler (22) ist, der dem Verdampfer (13) vorgelagert ist und eine Messung des momentanen Werts der Temperatur ($T_{air}$) der in den Verdampfer einströmenden Luft liefern kann.

15. Klimatisierungsanlage nach einem der Ansprüche 1 bis 11, **dadurch gekennzeichnet, dass** das erste Messglied ein Temperaturfühler (122) ist, der den momentanen Wert der Temperatur ($T_{FL}$) des Kältemittels liefern kann, wobei der Fühler im Bereich des ersten Punkts mit dem Flüssigteil des Druckmittels in Kontakt stehend angeordnet ist.

16. Klimatisierungsanlage nach Anspruch 15, **dadurch gekennzeichnet, dass** der erste Punkt (B 1) sich an einer Stelle des Klimatisierungskreises befindet, an der das Kältemittel in einem Zweiphasenzustand ist.

17. Klimatisierungsanlage nach einem der Ansprüche 13 und 15, bei der das Entspannungsglied ein thermostatischer Druckminderer ist, **dadurch gekennzeichnet, dass** der Temperaturfühler (122) im Kältemitteleinspritzbereich des Verdampfers angeordnet ist.

18. Klimatisierungsanlage nach einem der Ansprüche 13 bis 17, **dadurch gekennzeichnet, dass** die elektronische Steuervorrichtung den Wert des ersten Drucks (P1) aus dem von dem Temperaturfühler (122, 22) gelieferten Wert schätzen kann.

19. Klimatisierungsanlage nach einem der Ansprüche 13 bis 18, **dadurch gekennzeichnet, dass** der Temperaturfühler (22, 122) eine Zeitkonstante kleiner oder gleich 5 Sekunden hat.

**Claims**

1. An air conditioning installation for a vehicle with an engine provided with an injection computer (42) and a refrigerant fluid circuit comprising a compressor (14), a cooling member (11), a pressure relief member (12) and an evaporator (13), and an electronic control device (401) intended to interact with the refrigerant fluid circuit (10) and the injection computer (42),
   **characterised in that** it comprises:

   - a first measuring member suitable for providing a value relating to the pressure of the fluid at a first point in the air conditioning circuit ($B_1$), referred to as the first pressure ($P_1$), said first point being situated between the output of the pressure relief member and the output of the evaporator,

   - a second measuring member suitable for providing a value relating to the pressure of the fluid at a second point in the air conditioning circuit ($B_2$), referred to as the second pressure ($P_2$), said second point being situated at the input of the compressor,

   and **in that** the electronic control device (401) is capable of implementing the solving of an equation linking the mass flow rate of the refrigerant fluid (m) with the pressure difference between the first point and the second point ($P_1 - P_2$) in order to calculate an estimate of a quantity relating to the refrigerant fluid.

2. An air conditioning installation according to Claim 1, **characterised in that** the quantity relating to the refrigerant fluid is the refrigerant fluid mass flow rate (m), and **in that** the electronic control device (401) is capable of solving said equation using the value of the first pressure ($P_1$) and the value of the second pressure ($P_2$).

3. An air conditioning installation according to Claim 1, **characterised in that** the quantity relating to the refrigerant fluid is the second pressure ($P_2$), and **in that** the electronic control device is capable of solving said equation using the value of the mass flow rate of the fluid (m) and the value of the first pressure ($P_1$).

4. An air conditioning installation according to Claim 3, **characterised in that** the cooling member is a condenser, and **in that** it comprises measuring members suitable for providing a value relating to the temperature of the external air flow at the input of the condenser ($T_{ack}$) and a value relating to the pressure of the fluid at the output of the compressor, referred to as the high pressure ($P_d$), the electronic control device (401) being capable of using the values provided by said measuring members for implementing the solving of an equation linking the mass flow rate of the refrigerant fluid (m) with the temperature of the external air flow at the input of the condenser ($T_{ack}$) and the high pressure ($P_d$), in order to calculate an estimate of the instantaneous value of the mass flow rate of the refrigerant fluid (m).

5. An air conditioning installation according to Claim 1, **characterised in that** the compressor has a variable cubic capacity and **in that** the quantity relating to the refrigerant fluid is the minimum value of the fluid pressure ($P_{2\_min}$) corresponding to the maximum cubic capacity of the compressor, the electronic control device being capable of solving said equation using the value of the first pressure ($P_1$) and the value of the speed of rotation of the compressor (N).

6. An air conditioning installation according to Claim 3, **characterised in that** the value of the speed of rotation of the compressor (N) is provided to the electronic control device by the injection computer.

7. An installation according to one of the preceding claims, **characterised in that** the compressor is provided with a control valve and **in that** the second measuring member is a sensor, suitable for providing the instantaneous value of the control valve current ($I_v$), the electronic control device (401) being capable of calculating an initial estimate of the second pressure ($P_{2\_init}$) using the value of the compressor control valve current ($I_v$) provided by the second measuring member.

8. An air conditioning installation according to Claim 7 taken in combination with Claim 5, **characterised in that** the electronic control device (401) is capable of comparing the initial estimate of the second pressure ($P_{2\_init}$) with the minimum value of the second pressure ($P_{2-min}$).

9. An air conditioning installation according to Claim 8, **characterised in that** the electronic control device (401) is capable of reacting to the fact that the initial estimate of the second pressure ($P_{2\_init}$) is less than or equal to the minimum value of the second pressure ($P_{2-min}$) by providing a final estimate of the second pressure ($P_2$) substantially equal to the minimum value of the second pressure ($P_{2-min}$).

10. An air conditioning installation according to Claim 8, **characterised in that** the electronic control device (401) is capable of reacting to the fact that the second pressure ($P_{2\_init}$) is greater than the minimum value of the second pressure ($P_{2-min}$) by providing a final estimate of the second pressure ($P_2$) substantially equal to the initial estimate of the second pressure ($P_{2\_init}$).

11. An air conditioning installation according to one of Claims 1 to 4, **characterised in that** the second member is a sensor (23) placed at the second point, suitable for providing the instantaneous value of the second pressure (P2).

12. An air conditioning installation according to one of the preceding claims, **characterised in that** the first measuring member is a sensor (222) placed at the first point, suitable for directly providing the instantaneous value of the first pressure ($P_1$).

13. An air conditioning installation according to one of Claims 1 to 11, **characterised in that** the first measuring member is a temperature sensor (22), placed in the fins of the evaporator (13), suitable for providing a measurement of the instantaneous value of the temperature of the air in the evaporator ($T_{air}$).

14. An air conditioning installation according to one of Claims 1 to 11, **characterised in that** the first measuring member is a temperature sensor (22), placed downstream of the evaporator (13), suitable for providing a measurement of the instantaneous value of the temperature of the air entering the evaporator ($T_{air}$).

15. An air conditioning installation according to one of Claims 1 to 11, **characterised in that** the first measuring member is a temperature sensor (122) suitable for providing the instantaneous value of the temperature of the fluid ($T_{FL}$), the sensor being placed at the first point, in contact with the liquid part of the fluid.

16. An air conditioning installation according to Claim 15, **characterised in that** the first point (B1) is situated at a place in the air conditioning circuit where the refrigerant fluid is in a diphasic state.

17. An air conditioning installation according to one of Claims 13 and 15, in which the pressure relief member is a thermostatic pressure relief valve, **characterised in that** the temperature sensor (122) is placed in the fluid injection area of the evaporator.

18. An air conditioning installation according to one of Claims 13 to 17, **characterised in that** the electronic control device is suitable for estimating the value of the first pressure ($P_1$) using the value provided by the temperature sensor (122, 22).

19. An air conditioning installation according to one of Claims 13 to 18, **characterised in that** the temperature sensor (22, 122) has a time constant less than or equal to 5 seconds.

FIG.1a

FIG.1b

EP 1 403 107 B1

FIG.2

Estimer la pression $P_1$ — 100

Mesurer l'intensité de la vanne $I_V$ — 102

Calculer une estimation initiale de la pression d'aspiration $P_{2\text{-init}}$ — 104

Calculer la valeur minimale $P_{2\text{-min}}$ de la pression d'aspiration en cylindrée maximale — 106

$P_{2\text{-init}} \leqslant P_{2\text{-min}}$ ? — 108

O

N

$P_2 = P_{2\text{-min}}$ — 110

$P_2 = P_{2\text{-init}}$ — 112

Calculer le débit du fluide $m$ à partir de $P_1$ et $P_2$ — 114

FIG.3

FIG.4

FIG.5